# EUROPEAN PATENT SPECIFICATION

(11) **EP 4 462 587 B1**
(45) Date of publication and mention of the grant of the patent: **29.01.2025**
(21) Application number: 23173197.7
(22) Date of filing: 12.05.2023
(51) Int. Cl.: H01M 50/595, H01M 10/54

(54) **BATTERY**
BATTERIE
BATTERIE

(43) Date of publication of application: 13.11.2024
(73) Proprietor: Tiala Design Oy, 20100 Turku (FI)
(72) Inventor: Tiala, Matias, 20100 Turku (FI)
(74) Representative: Berggren Oy

(56) References cited:
- EP-A1- 2 963 702
- KR-A- 20170 019 044
- US-A1- 2013 108 900
- US-A1- 2015 064 502
- BATTERY STEWARDSHIP COUNCIL: "Battery safety - B-cycle", 17 February 2022 (2022-02-17), XP093100706, Retrieved from the Internet <URL:https://bcycle.com.au/how-you-can-b-cycle/battery-safety/> [retrieved on 20231113]

## Description

### TECHNICAL FIELD OF THE INVENTION

The present invention relates to a battery according to the preamble of the appended independent claim.

### BACKGROUND OF THE INVENTION

Batteries are widely used in various electrical devices. After use, the batteries are increasingly recycled to prevent the heavy metals and toxic chemicals contained in the batteries from ending up in the environment and to allow the raw materials to be collected and reused. A conventional way to recycle batteries is to return them into a battery recycling container at a collecting point that is usually located in a store that sells batteries. From the collecting point, the used batteries are delivered to a battery recycling plant to be processed.

Since the batteries are not usually fully discharged before they are discarded, the battery terminals need to be covered to prevent short circuits between the batteries. The short circuits are known to cause a potential fire hazard in the battery recycling process while the batteries are stored at home and in the battery recycling container at the collecting point, during the transportation of the batteries and while the batteries are handled in the recycling plant.

US 2015/064502 A1 and US 2013/108900 A1 disclose a relevant battery comprising a tape having a portion attached to the case and a folded portion.

A known solution to cover the battery terminals is to use pieces of non-conductive tape. This is, however, difficult and time-consuming, and it also requires a tape roll to be available, as a result of which the terminals of the used batteries are not often protected.

### OBJECTIVES OF THE INVENTION

It is the main objective of the present invention to reduce or even eliminate the prior art problems presented above.

It is an objective of the present invention to provide a battery that can be recycled safely. In more detail, it is an objective of the invention to provide a battery whose terminals can be covered without using manually assembled tape pieces from a separate tape roll. It is a further objective of the invention to provide a battery whose terminals can be covered quickly and easily immediately after the battery is removed from use.

In order to realise the above-mentioned objectives, the battery according to the invention is characterised by what is presented in the characterising portion of the appended independent claim. Advantageous embodiments of the invention are described in the dependent claims.

### DESCRIPTION OF THE INVENTION

A battery according to the invention comprises a casing, a positive and a negative terminal, and a first tape having a first portion attached to the casing and a second portion folded on the first portion, wherein the second portion is adapted to be unfolded to cover at least one of the positive and negative terminals.

The battery according to the invention can be a primary battery or a secondary battery. By a primary battery is meant a non-rechargeable battery that can be used only once. In the primary battery, the electrode materials are irreversibly changed during discharge. Examples of primary battery types are alkaline, zinc-carbon, lithium iron disulfide, lithium-thionyl chloride, and lithium manganese dioxide. By a secondary battery is meant a rechargeable battery that can be discharged and recharged multiple times. In the secondary battery, the original composition of the electrodes can be restored by recharging the battery with a reverse electric current. Examples of secondary battery types are lithium-ion, nickel-cadmium, and nickel-metal hydride. The battery according to the invention can be any of various standard sizes, such as D, C, AA, AAA, AAAA, or PP3 (9V).

The battery according to the invention has an integrated tape, i.e., the first tape, that can be arranged to cover the positive and/or the negative terminal when the battery is discarded. The first tape is made of a non-conductive material. Preferably, the first tape is such that its second portion can be arranged to cover the positive and the negative terminal. By covering the battery terminals, short circuits between the batteries or other electrically conductive materials in a battery recycling container can be prevented.

The first portion of the first tape has a first side and a second side, wherein the first side is an adhesive side with which the first portion is attached to a surface of the casing. The second portion of the first tape is folded on the second side of the first portion. The second portion may consist of one or more folded portions. The second side of the first portion and/or one or both sides of the second portion may comprise adhesive areas to keep the second portion folded against the first portion. When the battery is prepared for recycling, the second portion of the first tape is unfolded and arranged to cover the positive and/or the negative terminal. The second side of the first portion and/or one or both sides of the second portion may comprise adhesive areas to keep the second portion attached so that the terminal(s) remain covered. An essential feature of the battery according to the invention is that the first portion of the first tape is meant to remain attached to the casing all the time. This facilitates the use of the first tape. The second portion may comprise a pull tab for easy gripping of the second portion of the first tape.

The casing of the battery may have various shapes. Preferably, the casing has the shape of a cylinder, wherein the positive and negative terminals are located at opposite ends of the cylinder, or the shape of a cuboid, wherein the positive and negative terminals are located at one side of the cuboid.

An advantage of the battery according to the invention is that the battery can be recycled safely. Another advantage of the battery according to the invention is that the terminal(s) of the battery can be covered without using manually assembled tape pieces from a separate tape roll. Yet another advantage of the battery according to the invention is that the terminal(s) of the battery can be covered quickly and easily immediately after the battery is removed from use.

According to an embodiment of the invention the second portion of the first tape is adapted to be unfolded to cover the positive and the negative terminal. In other words, the second portion of the first tape is such that it can be arranged to cover both terminals of the battery.

According to an embodiment of the invention the second portion of the first tape comprises at least two folded portions. Preferably, the second portion of the first tape has two folded portions.

According to an embodiment of the invention the first tape comprises a third portion folded on the first portion, wherein the second portion of the first tape is adapted to be unfolded to cover the positive terminal and the third portion of the first tape is adapted to be unfolded to cover the negative terminal. The second portion and the third portion are located at opposite ends of the first portion. The second side of the first portion and/or one or both sides of the second and the third portion may comprise adhesive areas to keep the second and the third portion folded against the first portion. When the battery is prepared for recycling, the second portion is unfolded and arranged to cover the positive terminal and the third portion is unfolded and arranged to cover the negative terminal. The second and the third portion may comprise adhesive areas to keep the second and the third portion attached to the casing so that the positive and the negative terminal remain covered.

According to an embodiment of the invention the second portion and/or the third portion of the first tape comprises at least two folded portions. Preferably, the second and the third portion of the first tape have two folded portions.

According to an embodiment of the invention the first portion of the first tape extends in a lengthwise direction of the casing and has essentially the same length as the casing.

According to an embodiment of the invention the battery comprises a second tape having a first portion attached to the casing and a second portion folded on the first portion, wherein the second portion of the first tape is adapted to be unfolded to cover the positive terminal and the second portion of the second tape is adapted to be unfolded to cover the negative terminal. In this embodiment, the first tape is used to cover the positive terminal and the second tape is used to cover the negative terminal when the battery is discarded. The first and the second tape are made of a non-conductive material.

The first portion of the second tape has a first side and a second side, wherein the first side is an adhesive side with which the first portion is attached to a surface of the casing. The second portion of the second tape is folded on the second side of the first portion. The second portions of the first and the second tape may consist of one or more folded portions. The second sides of the first portions of the first and the second tape and/or one or both sides of the second portions of the first and the second tape may comprise adhesive areas to keep the second portions folded against the first portions. When the battery is prepared for recycling, the second portion of the first tape is unfolded and arranged to cover the positive terminal and the second portion of the second tape is unfolded and arranged to cover the negative terminal. The second portions of the first and the second tape may comprise adhesive areas to keep the second portions attached to the casing so that the positive and the negative terminal remain covered.

According to an embodiment of the invention the first tape and the second tape are attached to the same side of the casing. Preferably, the first tape and the second tape are sequentially aligned in such a manner that the second portions are located at further ends of the first portions.

According to an embodiment of the invention the first portion of the first tape and the first portion of the second tape extend in a lengthwise direction of the casing and have essentially half of a length of the casing.

According to an embodiment of the invention the first tape and the second tape are attached to opposite sides of the casing.

According to an embodiment of the invention the first portion of the first tape and the first portion of the second tape extend in a lengthwise direction of the casing and have essentially the same length as the casing.

According to an embodiment of the invention the second portion of the first tape and/or the second portion of the second tape comprises at least two folded portions. Preferably, the second portions of the first and the second tape have two folded portions.

According to an embodiment of the invention the number of folded portions is even. The number of folded portions can be, for example, two, four or six.

According to an embodiment of the invention a backing material of the first tape and/or the second tape is paper, plastic, polymer, or cloth.

According to an embodiment of the invention the first tape and/or the second tape is colour-coded. The colour-coded tapes can be utilised to recognize different types of batteries from each other at a collecting point and in a battery recycling plant. The first tape and/or the second tape may also contain text, URLs, or various scannable codes, such as QR codes and barcodes, that can provide information on the battery.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

### BRIEF DESCRIPTION OF THE DRAWINGS

- Figs. 1A-1C: illustrate the steps of preparing a battery according to a first embodiment of the invention for recycling,
- figs. 2A-2C: illustrate the steps of preparing a battery according to a second embodiment of the invention for recycling,
- fig. 3: illustrates a battery according to a third embodiment of the invention,
- fig. 4: illustrates a battery according to a fourth embodiment of the invention, and
- fig. 5: illustrates a battery according to a fifth embodiment of the invention.

### DETAILED DESCRIPTION OF THE DRAWINGS

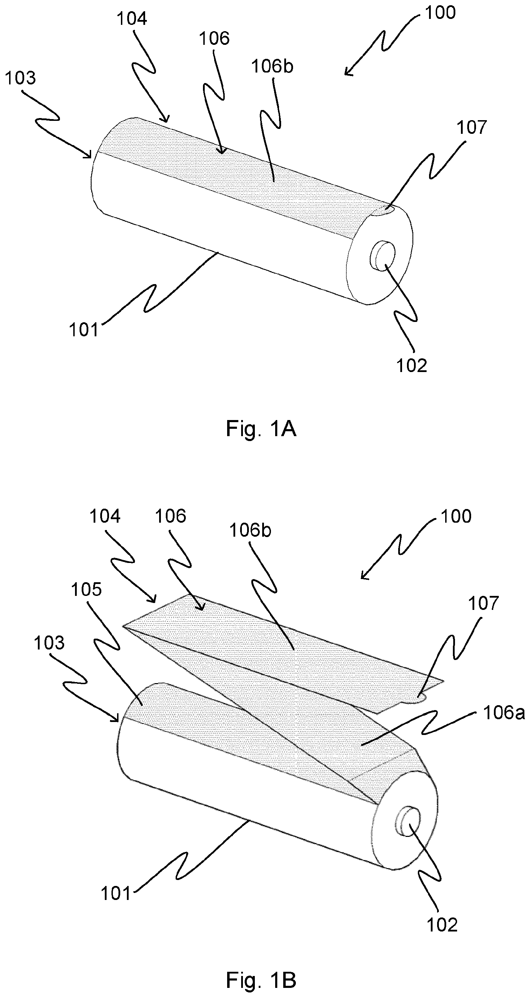

Figs. 1A-1C illustrate the steps of preparing a battery according to a first embodiment of the invention for recycling. The battery 100 comprises a cylindrical casing 101 having at its opposite ends a positive terminal 102 and a negative terminal 103. The battery 100 comprises a tape 104 having a first portion 105 and a second portion 106. The tape 104 is made of a non-conductive material.

The first portion 105 of the tape 104 is attached to the side of the casing 101. The second portion 106 of the tape 104 has two portions 106a and 106b and it is kept folded on the first portion 105 of the tape 104 when the battery 100 is used. The second portion 106 of the tape 104 comprises adhesive areas to keep the second portion 106 folded against the first portion 105. This situation is shown in fig. 1A.

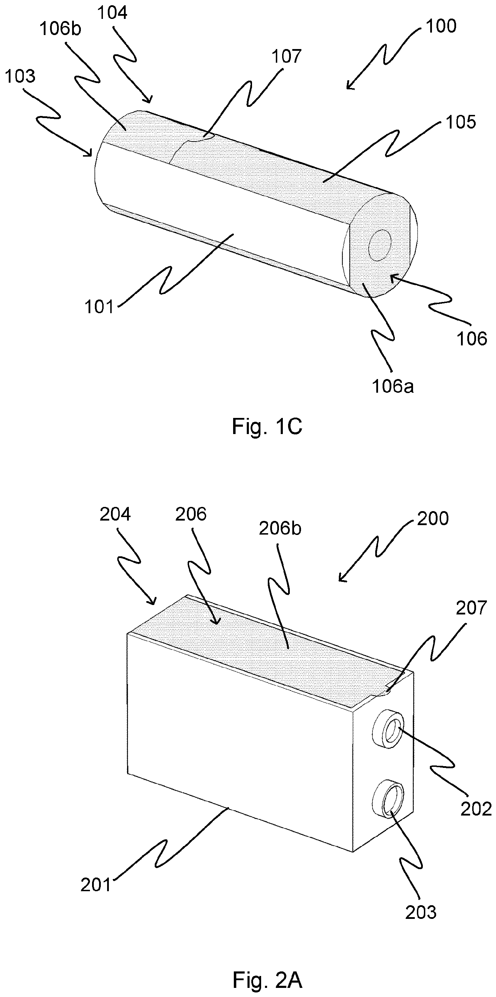

When the battery 100 is prepared for recycling, the second portion 106 of the tape 104 is unfolded (opened) by pulling the second portion 106 from its pull tab 107. This situation is shown in fig. 1B. Then the second portion 106 of the tape 104 is wrapped around the casing 101 so that it covers the positive terminal 102 and the negative terminal 103. The second portion 106 of the tape 104 comprises adhesive areas to keep the second portion 106 attached to the casing 101. This situation is shown in fig. 1C. By covering the positive terminal 102 and the negative terminal 103, short circuits between batteries 100 in a battery recycling container can be prevented. An essential feature of the battery 100 is that, when the battery 100 is prepared for recycling, the first portion 105 of the tape 100 remains attached to the casing 101.

Figs. 2A-2C illustrate the steps of preparing a battery according to a second embodiment of the invention for recycling. The battery 200 comprises a cuboid casing 201 having at one of its sides a positive terminal 202 and a negative terminal 203. The battery 200 comprises a tape 204 having a first portion 205 and a second portion 206. The tape 204 is made of a non-conductive material.

The first portion 205 of the tape 204 is attached to a side of the casing 201. The second portion 206 of the tape 204 has two portions 206a and 206b and it is kept folded on the first portion 205 of the tape 204 when the battery 200 is used. The second portion 206 of the tape 204 comprises adhesive areas to keep the second portion 206 folded against the first portion 205. This situation is shown in fig. 2A.

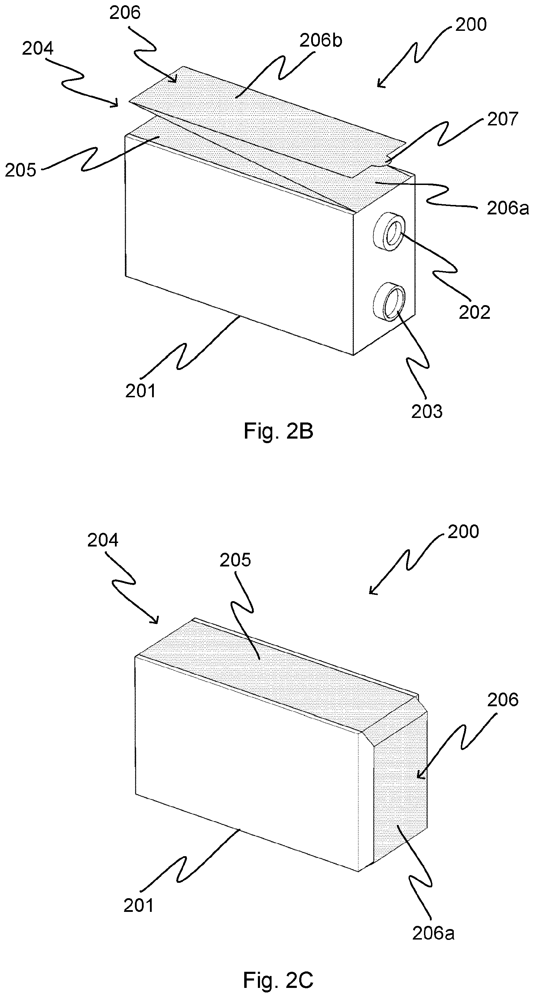

When the battery 200 is prepared for recycling, the second portion 206 of the tape 204 is unfolded (opened) by pulling the second portion 206 from its pull tab 207. This situation is shown in fig. 2B. Then the second portion 206 of the tape 204 is wrapped around the casing 201 so that it covers the positive terminal 202 and the negative terminal 203. The second portion 206 of the tape 204 comprises adhesive areas to keep the second portion 206 attached to the casing 201. This situation is shown in fig. 2C. By covering the positive terminal 202 and the negative terminal 203, short circuits between batteries 200 in a battery recycling container can be prevented. An essential feature of the battery 200 is that, when the battery 200 is prepared for recycling, the first portion 205 of the tape 200 remains attached to the casing 201.

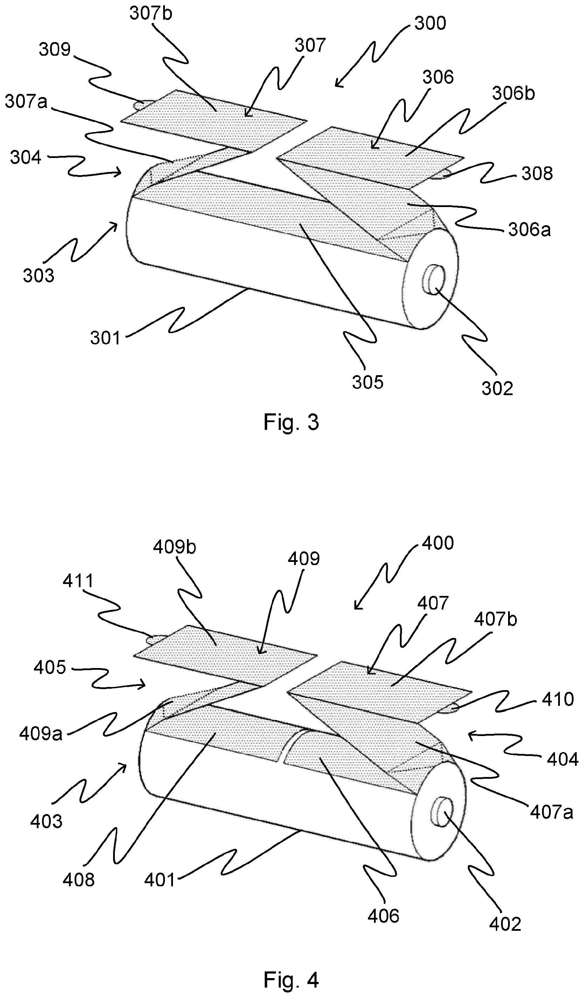

Fig. 3 illustrates a battery according to a third embodiment of the invention. The battery 300 comprises a cylindrical casing 301 having at its opposite ends a positive terminal 302 and a negative terminal 303. The battery 300 comprises a tape 304 having a first portion 305, a second portion 306 and a third portion 307. The first portion 305 of the tape 304 is attached to the side of the casing 301. The second portion 306 and the third portion 307 are connected to opposite ends of the first portion 305. The tape 304 is made of a non-conductive material.

The second portion 306 of the tape 304 has two portions 306a and 306b and it is kept folded on the first portion 305 of the tape 304 when the battery 300 is used. The second portion 306 of the tape 304 comprises adhesive areas to keep the second portion 306 folded against the first portion 305. When the battery 300 is prepared for recycling, the second portion 306 of the tape 304 can be unfolded (opened) by pulling the second portion 306 from its pull tab 308. The second portion 306 of the tape 304 can be wrapped around the casing 301 so that it covers the positive terminal 302. The second portion 306 of the tape 304 comprises adhesive areas to keep the second portion 306 attached to the casing 301.

The third portion 307 of the tape 304 has two portions 307a and 307b and it is kept folded on the first portion 305 of the tape 304 when the battery 300 is used. The third portion 307 of the tape 304 comprises adhesive areas to keep the third portion 307 folded against the first portion 305. When the battery 300 is prepared for recycling, the third portion 307 of the tape 304 can be unfolded (opened) by pulling the third portion 307 from its pull tab 309. The third portion 307 of the tape 304 can be wrapped around the casing 301 so that it covers the negative terminal 303. The third portion 307 of the tape 304 comprises adhesive areas to keep the third portion 307 attached to the casing 301.

Fig. 4 illustrates a battery according to a fourth embodiment of the invention. The battery 400 comprises a cylindrical casing 401 having at its opposite ends a positive terminal 402 and a negative terminal 403. The battery 400 comprises two tapes 404 and 405. The tape 404 has a first portion 406 and a second portion 407, and the tape 405 has a first portion 408 and a second portion 409. The first portions 406 and 408 of the tapes 404 and 405 are attached to the side of the casing 401. The tapes 404 and 405 are made of a non-conductive material.

The second portion 407 of the tape 404 has two portions 407a and 407b and it is kept folded on the first portion 406 of the tape 404 when the battery 400 is used. The second portion 407 of the tape 404 comprises adhesive areas to keep the second portion 407 folded against the first portion 406. When the battery 400 is prepared for recycling, the second portion 407 of the tape 404 can be unfolded (opened) by pulling the second portion 407 from its pull tab 410. The second portion 407 of the tape 404 can be wrapped around the casing 401 so that it covers the positive terminal 402. The second portion 407 of the tape 404 comprises adhesive areas to keep the second portion 407 attached to the casing 401.

The second portion 409 of the tape 405 has two portions 409a and 409b and it is kept folded on the first portion 408 of the tape 405 when the battery 400 is used. The second portion 409 of the tape 405 comprises adhesive areas to keep the second portion 409 folded against the first portion 408. When the battery 400 is prepared for recycling, the second portion 409 of the tape 405 can be unfolded (opened) by pulling the second portion 409 from its pull tab 411. The second portion 409 of the tape 405 can be wrapped around the casing 401 so that it covers the negative terminal 403. The second portion 409 of the tape 405 comprises adhesive areas to keep the second portion 409 attached to the casing 401.

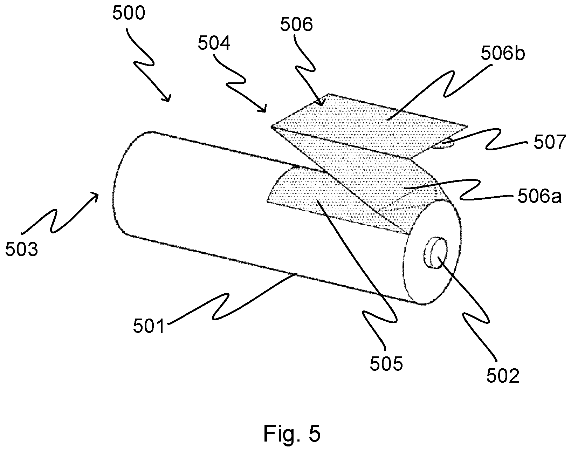

Fig. 5 illustrates a battery according to a fifth embodiment of the invention. The battery 500 comprises a cylindrical casing 501 having at its opposite ends a positive terminal 502 and a negative terminal 503. The battery 500 comprises a tape 504 having a first portion 505 and a second portion 506. The first portion 505 of the tape 504 is attached to the side of the casing 501. The tape 504 is made of a non-conductive material.

The second portion 506 of the tape 504 has two portions 506a and 506b and it is kept folded on the first portion 505 of the tape 504 when the battery 500 is used. The second portion 506 of the tape 504 comprises adhesive areas to keep the second portion 506 folded against the first portion 505. When the battery 500 is prepared for recycling, the second portion 506 of the tape 504 can be unfolded (opened) by pulling the second portion 506 from its pull tab 507. The second portion 506 of the tape 504 can be wrapped around the casing 501 so that it covers the positive terminal 502. The second portion 506 of the tape 504 comprises adhesive areas to keep the second portion 506 attached to the casing 501.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A battery (100, 200, 300, 400, 500), comprising:
- a casing (101, 201, 301, 401, 501),
- a positive and a negative terminal (102, 103, 202, 203, 302, 303, 402, 403, 502, 503), and
- a first tape (104, 204, 304, 404, 504) having a first portion (105, 205, 305, 406, 505) attached to the casing (101, 201, 301, 401, 501) and a second portion (106, 206, 306, 407, 506) folded on the first portion (105, 205, 305, 406, 505),
**characterised in that** the second portion (106, 206, 306, 407, 506) is adapted to be unfolded to cover at least one of the positive and negative terminals (102, 103, 202, 203, 302, 303, 402, 403, 502, 503).

2. The battery according to claim 1, **characterised in that** the second portion (106, 206) of the first tape (104, 204) is adapted to be unfolded to cover the positive and the negative terminal (102, 103, 202, 203).

3. The battery according to claim 2, **characterised in that** the second portion (106, 206) of the first tape (104, 204) comprises at least two folded portions (106a, 106b, 206a, 206b).

4. The battery according to claim 1, **characterised in that** the first tape (304) comprises a third portion (307) folded on the first portion (305), wherein the second portion (306) of the first tape (304) is adapted to be unfolded to cover the positive terminal (302) and the third portion (307) of the first tape (304) is adapted to be unfolded to cover the negative terminal (303).

5. The battery according to claim 4, **characterised in that** the second portion (306) and/or the third portion (307) of the first tape (304) comprises at least two folded portions (306a, 306b, 307a, 307b).

6. The battery according to any of the preceding claims, **characterised in that** the first portion (105, 205, 305) of the first tape (104, 204, 304) extends in a lengthwise direction of the casing (101, 201, 301) and has essentially the same length as the casing (101, 201, 301).

7. The battery according to claim 1, **characterised in that** the battery (400) comprises a second tape (405) having a first portion (408) attached to the casing (401) and a second portion (409) folded on the first portion (408), wherein the second portion (407) of the first tape (404) is adapted to be unfolded to cover the positive terminal (402) and the second portion (409) of the second tape (405) is adapted to be unfolded to cover the negative terminal (403).

8. The battery according to claim 7, **characterised in that** the first tape (404) and the second tape (405) are attached to the same side of the casing (401).

9. The battery according to claim 8, **characterised in that** the first portion (406) of the first tape (404) and the first portion (408) of the second tape (405) extend in a lengthwise direction of the casing (401) and have essentially half of a length of the casing (401).

10. The battery according to claim 7, **characterised in that** the first tape (404) and the second tape (405) are attached to opposite sides of the casing (401).

11. The battery according to claim 10, **characterised in that** the first portion (406) of the first tape (404) and the first portion (408) of the second tape (405) extend in a lengthwise direction of the casing (401) and have essentially the same length as the casing (401).

12. The battery according to any of claims 7 to 11, **characterised in that** the second portion (407) of the first tape (404) and/or the second portion (409) of the second tape (405) comprises at least two folded portions (407a, 407b, 409a, 409b).

13. The battery according to claim 3, 5 or 12, **characterised in that** the number of folded portions (106a, 106b, 206a, 206b, 306a, 306b, 307a, 307b, 407a, 407b, 409a, 409b) is even.

14. The battery according to any of the preceding claims, **characterised in that** a backing material of the first tape (104, 204, 304, 404, 504) and/or the second tape (405) is paper, plastic, polymer, or cloth.

15. The battery according to any of the preceding claims, **characterised in that** the first tape (104, 204, 304, 404, 504) and/or the second tape (405) is colour-coded.

## Patentansprüche

1. Batterie (100, 200, 300, 400, 500), umfassend:
- ein Gehäuse (101, 201, 301, 401, 501),
- einen Plus- und einen Minus-Anschluss (102, 103, 202, 203, 302, 303, 402, 403, 502, 503), und
- ein erstes Band (104, 204, 304, 404, 504) mit einem ersten Abschnitt (105, 205, 305, 406, 505), der an dem Gehäuse (101, 201, 301, 401, 501) befestigt ist, und einem zweiten Abschnitt (106, 206, 306, 407, 506), der auf den ersten Abschnitt (105, 205, 305, 406, 505) gefaltet ist,
**dadurch gekennzeichnet, dass** der zweite Abschnitt (106, 206, 306, 407, 506) dazu angepasst ist, entfaltet zu werden, um mindestens einen des Plus- und des Minus-Anschlusses (102, 103, 202, 203, 302, 303, 402, 403, 502, 503) abzudecken.

2. Batterie nach Anspruch 1, **dadurch gekennzeichnet, dass** der zweite Abschnitt (106, 206) des ersten Bandes (104, 204) dazu angepasst ist, entfaltet zu werden, um den Plus- und den Minus-Anschluss (102, 103, 202, 203) abzudecken.

3. Batterie nach Anspruch 2, **dadurch gekennzeichnet, dass** der zweite Abschnitt (106, 206) des ersten Bandes (104, 204) mindestens zwei gefaltete Abschnitte (106a, 106b, 206a, 206b) umfasst.

4. Batterie nach Anspruch 1, **dadurch gekennzeichnet, dass** das erste Band (304) einen dritten Abschnitt (307) umfasst, der auf den ersten Abschnitt (305) gefaltet ist, wobei der zweite Abschnitt (306) des ersten Bandes (304) dazu angepasst ist, entfaltet zu werden, um den Plus-Anschluss (302) abzudecken, und der dritte Abschnitt (307) des ersten Bandes (304) dazu ausgelegt ist, entfaltet zu werden, um den Minus-Anschluss (303) abzudecken.

5. Batterie nach Anspruch 4, **dadurch gekennzeichnet, dass** der zweite Abschnitt (306) und/oder der dritte Abschnitt (307) des ersten Bandes (304) mindestens zwei gefaltete Abschnitte (306a, 306b, 307a, 307b) umfasst.

6. Batterie nach einem der vorhergehenden Ansprüche, **dadurch gekennzeichnet, dass** sich der erste Abschnitt (105, 205, 305) des ersten Bandes (104, 204, 304) in Längsrichtung des Gehäuses (101, 201, 301) erstreckt und im Wesentlichen die gleiche Länge wie das Gehäuse (101, 201, 301) aufweist.

7. Batterie nach Anspruch 1, **dadurch gekennzeichnet, dass** die Batterie (400) ein zweites Band (405) mit einem ersten Abschnitt (408), der an dem Gehäuse (401) befestigt ist, und einem zweiten Abschnitt (409), der auf den ersten Abschnitt (408) gefaltet ist, umfasst, wobei der zweite Abschnitt (407) des ersten Bandes (404) dazu angepasst ist, entfaltet zu werden, um den Plus-Anschluss (402) abzudecken, und der zweite Abschnitt (409) des zweiten Bandes (405) dazu angepasst ist, entfaltet zu werden, um den Minus-Anschluss (403) abzudecken.

8. Batterie nach Anspruch 7, **dadurch gekennzeichnet, dass** das erste Band (404) und das zweite Band (405) an derselben Seite des Gehäuses (401) befestigt sind.

9. Batterie nach Anspruch 8, **dadurch gekennzeichnet, dass** sich der erste Abschnitt (406) des ersten Bandes (404) und der erste Abschnitt (408) des zweiten Bandes (405) in Längsrichtung des Gehäuses (401) erstrecken und im Wesentlichen die Hälfte einer Länge des Gehäuses (401) aufweisen.

10. Batterie nach Anspruch 7, **dadurch gekennzeichnet, dass** das erste Band (404) und das zweite Band (405) an gegenüberliegenden Seiten des Gehäuses (401) befestigt sind.

11. Batterie nach Anspruch 10, **dadurch gekennzeichnet, dass** sich der erste Abschnitt (406) des ersten Bandes (404) und der erste Abschnitt (408) des zweiten Bandes (405) in Längsrichtung des Gehäuses (401) erstrecken und im Wesentlichen die gleiche Länge wie das Gehäuse (401) aufweisen.

12. Batterie nach einem der Ansprüche 7 bis 11, **dadurch gekennzeichnet, dass** der zweite Abschnitt (407) des ersten Bandes (404) und/oder der zweite Abschnitt (409) des zweiten Bandes (405) mindestens zwei gefaltete Abschnitte (407a, 407b, 409a, 409b) umfasst.

13. Batterie nach Anspruch 3, 5 oder 12, **dadurch gekennzeichnet, dass** die Anzahl der gefalteten Abschnitte (106a, 106b, 206a, 206b, 306a, 306b, 307a, 307b, 407a, 407b, 409a, 409b) gerade ist.

14. Batterie nach einem der vorhergehenden Ansprüche, **dadurch gekennzeichnet, dass** ein Trägermaterial des ersten Bandes (104, 204, 304, 404, 504) und/oder des zweiten Bandes (405) Papier, Kunststoff, Polymer oder Stoff ist.

15. Batterie nach einem der vorhergehenden Ansprüche, **dadurch gekennzeichnet, dass** das erste Band (104, 204, 304, 404, 504) und/oder das zweite Band (405) farbcodiert ist.

## Revendications

1. Pile (100, 200, 300, 400, 500), comprenant :
- une enveloppe (101, 201, 301, 401, 501),
- une borne positive et une borne négative (102, 103, 202, 203, 302, 303, 402, 403, 502, 503), et
- une première bande (104, 204, 304, 404, 504) ayant une première partie (105, 205, 305, 406, 505) attachée à l'enveloppe (101, 201, 301, 401, 501) et une deuxième partie (106, 206, 306, 407, 506) pliée sur la première partie (105, 205, 305, 406, 505),
**caractérisée en ce que** la deuxième partie (106, 206, 306, 407, 506) est adaptée pour être dépliée pour couvrir au moins une des bornes positive et négative (102, 103, 202, 203, 302, 303, 402, 403,502,503).

2. Pile selon la revendication 1, **caractérisée en ce que** la deuxième partie (106, 206) de la première bande (104, 204) est adaptée pour être dépliée pour couvrir la borne positive et la borne négative (102, 103, 202, 203).

3. Pile selon la revendication 2, **caractérisée en ce que** la deuxième partie (106, 206) de la première bande (104, 204) comprend au moins deux parties pliées (106a, 106b, 206a, 206b).

4. Pile selon la revendication 1, **caractérisée en ce que** la première bande (304) comprend une troisième partie (307) pliée sur la première partie (305), dans laquelle la deuxième partie (306) de la première bande (304) est adaptée pour être dépliée pour couvrir la borne positive (302) et la troisième partie (307) de la première bande (304) est adaptée pour être dépliée pour couvrir la borne négative (303).

5. Pile selon la revendication 4, **caractérisée en ce que** la deuxième partie (306) et/ou la troisième partie (307) de la première bande (304) comprennent au moins deux parties pliées (306a, 306b, 307a, 307b).

6. Pile selon de quelconque des revendications précédentes, **caractérisée en ce que** la première partie (105, 205, 305) de la première bande (104, 204, 304) s'étend dans une direction en longueur de l'enveloppe (101, 201, 301) et a essentiellement la même longueur que l'enveloppe (101, 201, 301).

7. Pile selon la revendication 1, **caractérisée en ce que** la pile (400) comprend une seconde bande (405) ayant une première partie (408) attachée à l'enveloppe (401) et une seconde partie (409) pliée sur la première partie (408), dans laquelle la deuxième partie (407) de la première bande (404) est adaptée pour être dépliée pour couvrir la borne positive (402) et la seconde partie (409) de la seconde bande (405) est adaptée pour être dépliée pour couvrir la borne négative (403).

8. Pile selon la revendication 7, **caractérisée en ce que** la première bande (404) et la seconde bande (405) sont attachées au même côté de l'enveloppe (401).

9. Pile selon la revendication 8, **caractérisée en ce que** la première partie (406) de la première bande (404) et la première partie (408) de la seconde bande (405) s'étendent dans une direction en longueur de l'enveloppe (401) et ont essentiellement la moitié d'une longueur de l'enveloppe (401).

10. Pile selon la revendication 7, **caractérisée en ce que** la première bande (404) et la seconde bande (405) sont attachées à des côtés opposés de l'enveloppe (401).

11. Pile selon la revendication 10, **caractérisée en ce que** la première partie (406) de la première bande (404) et la première partie (408) de la seconde bande (405) s'étendent dans une direction en longueur de l'enveloppe (401) et ont essentiellement la même longueur que l'enveloppe (401).

12. Pile selon de quelconques des revendications 7 à 11, **caractérisée en ce que** la deuxième partie (407) de la première bande (404) et/ou la seconde partie (409) de la seconde bande (405) comprennent au moins deux parties pliées (407a, 407b, 409a, 409b).

13. Pile selon la revendication 3, 5 ou 12, **caractérisée en ce que** le nombre de parties pliées (106a, 106b, 206a, 206b, 306a, 306b, 307a, 307b, 407a, 407b, 409a, 409b) est pair.

14. Pile selon de quelconque des revendications précédentes, **caractérisée en ce qu'**un matériau de support de la première bande (104, 204, 304, 404, 504) et/ou de la seconde bande (405) est du papier, du plastique, un polymère, ou un tissu.

15. Pile selon de quelconque des revendications précédentes, **caractérisée en ce que** la première bande (104, 204, 304, 404, 504) et/ou la seconde bande (405) ont un code couleur.
